# FASCICULE DE BREVET EUROPEEN

(11) **EP 2 852 815 B1**
(45) Date de publication et mention de la délivrance du brevet: **04.01.2017**
(21) Numéro de dépôt: 13724261.6
(22) Date de dépôt: 21.05.2013
(51) Int. Cl.: G01B 11/24

(54) **CONVERTISSEUR CHROMATIQUE D'ALTIMÉTRIE**
CHROMATISCHER HÖHENMESSWANDLER
CHROMATIC ALTIMETRY CONVERTER

(30) Priorité: 21.05.2012 EP 12168774
(43) Date de publication de la demande: 01.04.2015
(73) Titulaire: Unitechnologies SA, 3238 Gals (CH)
(72) Inventeur: BURRY, Jean-Michel, F-01460 Montreal la Cluse (FR); BERGER, Leon, CH-2000 Neuchâtel (CH)
(74) Mandataire: e-Patent SA
(86) Numéro de dépôt international: PCT/EP2013/060434
(87) Numéro de publication internationale: WO 2013/174826

(56) Documents cités:
- FR-A1- 2 707 018
- US-A1- 2008 259 354
- US-A1- 2009 091 723

## Description

### Domaine technique

La présente invention est relative au domaine de la numérisation en trois dimensions, en temps réel et sans contact, d'objets fabriqués industriellement ou conçus dans des laboratoires de recherche, et concerne en particulier les appareils optiques dits « confocaux chromatiques ».

Plus précisément, l'invention se rapporte à un convertisseur chromatique d'altimétrie qui génère une image réelle du champ de mesure dans lequel se trouve un échantillon, en convertissant la hauteur locale de sa surface en longueur d'onde.

Le dispositif comprend une source lumineuse polychromatique et un dispositif optique destiné à transformer la lumière émise par la source, en de nombreux faisceaux parallèles polarisés et pourvus de chromatisme essentiellement axial. La réflexion de ces faisceaux sur l'échantillon à étudier est ensuite analysée par un dispositif d'analyse afin de connaître la hauteur locale de la surface de l'échantillon.

### Etat de la technique

Des dispositifs permettant de savoir quelle est la hauteur d'une surface ont déjà été divulgués, par exemple dans le brevet EP 0950168B1. L'appareil présenté numérise des tranches de la surface d'un échantillon, puis effectue une reconstitution tridimensionnelle de la surface à l'aide de moyens informatiques. Pour cela, l'échantillon est éclairé par un faisceau chromatique, et posé sur une platine pouvant être déplacée horizontalement selon des axes x et y. Pour une position y donnée, l'appareil mesure la longueur d'onde réfléchie par la surface pour une série de coordonnées x, ce qui permet d'en déduire la hauteur z de l'échantillon grâce au codage chromatique.

L'inconvénient majeur de cette technique d'analyse réside dans la durée de numérisation d'une image, qui est très longue. Cela est dû à deux facteurs : (i) la mesure qui est réalisée point par point, et (ii) la platine qui doit être bougée au cours des acquisitions.

Le dispositif confocal chromatique présenté dans la demande de brevet FR 2950441A1 permet de mesurer la hauteur d'une surface de manière plus rapide.

Pour cela, plusieurs voies de mesures indépendantes déterminent simultanément la hauteur de plusieurs points de la surface, de sorte qu'une fraction de la zone d'observation est sondée en une seule fois.

Plus précisément, chaque faisceau réfléchi par un point de la surface est dispersé par un dispositif d'analyse spectrale, de façon à ce que chaque spectre obtenu occupe tout ou partie d'une ligne de pixels d'un photodétecteur. Le nombre de points de la surface pouvant être analysés simultanément est donc limité.

A titre d'exemple, le titulaire de ce brevet précise que le dispositif permet de partager un détecteur photoélectrique de 2048 pixels entre 10 voies de mesure.

Pour obtenir la mesure entière de la zone d'observation, un dispositif de balayage interne est ajouté à l'appareil. Ce dispositif consiste par exemple en un miroir tournant qui défléchit les faisceaux issus des voies de mesure vers différents points de la surface de l'échantillon à étudier. Grâce au dispositif de balayage interne, les acquisitions sont réalisées sans déplacer l'échantillon.

Cette méthode de balayage interne dans un dispositif confocal permet d'améliorer la vitesse d'acquisition des mesures, mais de manière insuffisante.

En outre, le fait que chaque voie de mesure soit indépendante engendre une augmentation significative du coût de l'appareil, car les éléments optiques et les dispositifs d'analyse spectrale sont multipliés.

Par ailleurs, le fait de juxtaposer les voies de mesure accroît de façon notable la taille de la machine. Pour limiter cet inconvénient, l'appareil est séparé en deux blocs reliés par des fibres optiques afin d'avoir une tête de mesure de dimensions raisonnables, mais cela ne résout pas pour autant le problème lié à l'encombrement total du dispositif.

Il apparaît de ce qui précède que les systèmes actuels sont peu adaptés aux contraintes industrielles, que ce soit en termes de coût, d'encombrement, et surtout en termes de rapidité d'analyse des échantillons étudiés.

La demande de brevet FR 2707018 A1 divulgue un dispositif amélioré de numérisation en 3 dimensions permettant de couvrir une zone d'observation étendue de manière rapide. Plus précisément, ce dispositif comprend un disque percé d'une multitude de trous et entraîné en rotation pour créer et déplacer des sources lumineuses secondaires, à partir d'une source lumineuse unique, afin de balayer l'ensemble de la zone d'observation.

### Divulgation de l'invention

Un but principal de la présente invention est de proposer une construction alternative à celle des dispositifs confocaux chromatiques connus de l'art antérieur, en proposant un convertisseur chromatique d'altimétrie qui permette de réaliser une image réelle et complète d'une zone d'observation prédéfinie de la surface d'un échantillon représentative de la hauteur locale de cet échantillon.

A cet effet, le convertisseur chromatique d'altimétrie selon l'invention comporte :
un dispositif d'illumination de l'échantillon comprenant au moins une source de lumière polychromatique et, agencé de manière à couvrir à chaque instant l'ensemble de la zone d'observation prédéfinie,
un masque comportant une pluralité d'organes de transmission et permettant de générer simultanément N faisceaux incidents à partir de ladite lumière polychromatique, chaque faisceau incident définissant un point objet de l'échantillon, le masque étant agencé de telle manière qu'il occulte une portion de la lumière polychromatique pour ne laisser passer que les N faisceaux incidents, ceux-ci étant répartis sensiblement dans toute l'étendue de ladite zone d'observation
un dispositif optique destiné à introduire du chromatisme axial dans chacun desdits N faisceaux incidents, suivant une plage donnée de longueurs d'onde, avant que les N faisceaux incidents ne parviennent à la surface de l'échantillon pour être réfléchis en N faisceaux réfléchis respectifs par les points objets correspondants,
un dispositif de filtrage présentant une pluralité de trous de filtrage, N trous de filtrage étant associés aux N faisceaux réfléchis respectifs pour les convertir en des faisceaux filtrés de faible largeur spectrale, destiné à former des taches images constitutives de ladite image réelle,
caractérisé par le fait qu'il comporte au moins un dispositif de polarisation permettant de polariser les N faisceaux incidents et les N faisceaux réfléchis, et
par le fait que le dispositif optique destiné à introduire du chromatisme axial est un autocollimateur d'Offner comportant au moins un miroir de Mangin.

Un autocollimateur d'Offner est par exemple décrit dans le brevet US 3,674,334.

Un autocollimateur d'Offner est un système optique particulièrement intéressant car il joue le même rôle qu'un objectif tout en étant plus compact et moins coûteux. Par ailleurs, ce type de système n'introduit pas d'aberrations jusqu'au troisième ordre.

Par ailleurs, le masque est avantageusement monté mobile pour modifier la position des points objets au cours du temps, pour que ces derniers balayent sensiblement toute la zone d'observation.

Selon un mode de réalisation de l'invention, le masque présente sensiblement la forme d'un disque, et comporte au moins un secteur comprenant les organes de transmission, tandis qu'un masque supplémentaire, de géométrie similaire à celle du premier masque, comporte au moins un secteur comprenant les trous de filtrage du dispositif de filtrage. Dans ce mode de réalisation, les deux masques sont entraînés en rotation à la même vitesse au moyen d'un organe d'entraînement, et agencés de telle manière qu'à chaque instant, un trou de filtrage du masque supplémentaire est associé à l'un faisceau des N faisceaux réfléchis par un point objet de la surface de l'échantillon.

Selon un autre mode de réalisation avantageux, le masque présente sensiblement la forme d'un disque, et porte le dispositif de filtrage, de manière à générer les N faisceaux incidents au moyen des organes de transmission, et à filtrer les N faisceaux réfléchis au moyen des trous de filtrage. Ici, les organes de transmissions et les trous de filtrage sont agencés de telle manière qu'à chaque instant, un trou de filtrage du masque est associé à l'un des N faisceaux réfléchis par un point objet de la surface de l'échantillon.

Selon un mode de réalisation préféré, le masque comporte un nombre pair de secteurs, chaque secteur comprenant des organes de transmission étant associé à un secteur comprenant des trous de filtrage, qui lui est diamétralement opposé.

Par ailleurs, le ou les masque(s) peuvent avantageusement comporter des zones neutres bloquant le passage de la lumière polychromatique.

De manière préférée, les organes de transmission comportent des trous, dits trous sources, de plus grand diamètre que les trous de filtrage.

Selon un mode de réalisation préféré, les N faisceaux incidents sont également filtrés au moyen de N trous de filtrage pour être convertis en des faisceaux spatialement homogènes, avant de parvenir à la surface de l'échantillon.

De cette manière, les trous de filtrage permettent à la fois de maximiser le rapport signal sur bruit des faisceaux incidents, et de limiter la plage de longueurs d'onde des faisceaux réfléchis par la surface.

En outre, le convertisseur chromatique d'altimétrie selon l'invention peut comprendre un dispositif de séparation de la lumière, destiné à séparer les flux lumineux des N faisceaux incidents et des N faisceaux réfléchis, pour permettre à la quasi-totalité du flux lumineux des premiers de se propager en direction de ladite surface de l'échantillon et à la quasi-totalité du flux lumineux des seconds de se propager en direction d'un dispositif d'analyse comportant une caméra, le dispositif d'analyse étant agencé pour convertir une longueur d'onde en une hauteur locale du point objet correspondant de la surface de l'échantillon.

De façon avantageuse, la source de lumière polychromatique éclaire le masque de manière séquentielle. De cette manière, le dispositif d'analyse spectrale n'acquiert que des données pertinentes pour l'analyse de l'échantillon.

La caméra est choisie de préférence parmi une caméra trichromatique ou une caméra à couleurs complémentaires. De manière avantageuse, le capteur de la caméra est un capteur CCD, tri-CCD, CMOS ou multiple CMOS.

De manière préférée, le convertisseur chromatique d'altimétrie selon l'invention peut comprendre un second autocollimateur d'Offner, dont l'un des deux miroirs est un miroir de Mangin, l'autocollimateur d'Offner étant disposé en amont du dispositif destiné à introduire du chromatisme axial, pour corriger les défauts chromatiques générés par le dispositif de séparation de la lumière.

Alternativement, le dispositif optique destiné à corriger les défauts chromatiques des faisceaux incidents peut également être un objectif classique.

Selon un autre aspect de l'invention, le convertisseur chromatique d'altimétrie est monté sur un objectif télécentrique, préférablement bi-télécentrique, pour pouvoir adapter le champ de mesure à la taille de l'objet à observer.

Tous les faisceaux issus d'un objectif télécentrique ou bi-télécentrique présentent l'avantage d'être parallèles à l'axe optique. En revanche selon sa qualité, ce type d'objectif peut générer du chromatisme sur les bords de la zone d'observation, mais une simple calibration préalable aux mesures permet d'y remédier. Pour cela un échantillon de référence peut être utilisé, afin de déterminer la correspondance entre la longueur d'onde des faisceaux réfléchis et la hauteur des points objets correspondants.

Par ailleurs, la profondeur de champ d'un objectif télécentrique ou bi-télécentrique utilisé avec des faisceaux chromatiques est beaucoup plus étendue qu'avec des faisceaux blancs.

Grâce à cette caractéristique particulièrement avantageuse, le convertisseur chromatique d'altimétrie peut non seulement être utilisé pour mesurer la hauteur de la surface d'un échantillon, mais aussi pour mesurer des distances entre différents points de l'échantillon, puisque l'ensemble de la zone d'observation est nette.

De ce fait, l'appareil est très bien adapté pour être utilisé dans l'industrie horlogère pour examiner, par exemple, les finitions des carrures de montre, ou dans l'aéronautique pour contrôler des ailettes de compresseur.

Enfin, la présente invention se rapporte au procédé de réalisation d'une image de la zone d'observation de la surface d'un échantillon utilisant un convertisseur chromatique d'altimétrie selon l'invention.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- la figure 1a représente une vue de face simplifiée d'un convertisseur chromatique d'altimétrie selon un premier mode de réalisation ;
- la figure 1b représente une vue en perspective simplifiée d'un convertisseur chromatique d'altimétrie monté sur un objectif télécentrique;
- la figure 2 représente une vue de face simplifiée du masque selon le premier mode de réalisation de l'invention ;
- la figure 3 représente un exemple de sensibilité spectrale d'une caméra du dispositif d'analyse spectrale selon l'invention, ainsi qu'un exemple de pic spectral typiquement reçu par un pixel de la caméra.

### Mode(s) de réalisation de l'invention

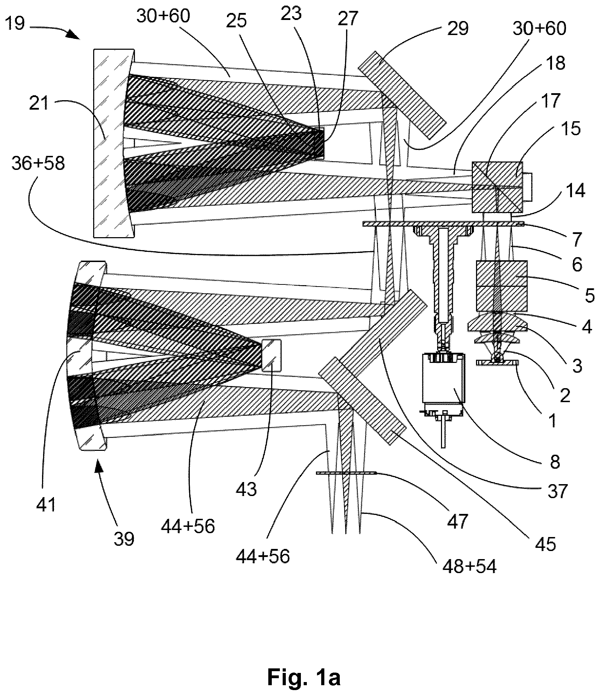

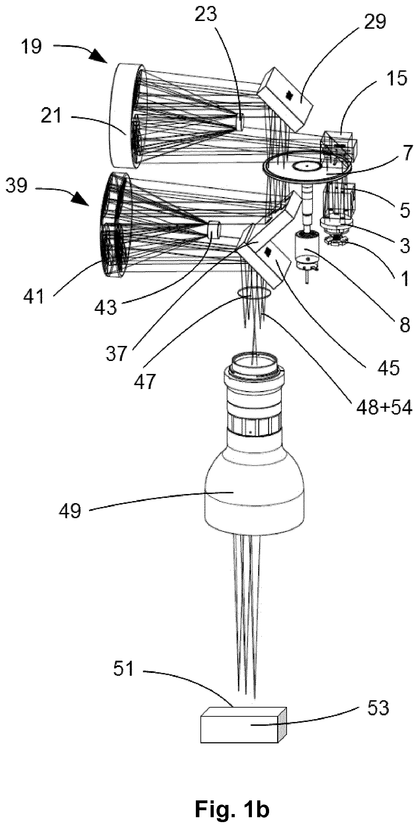

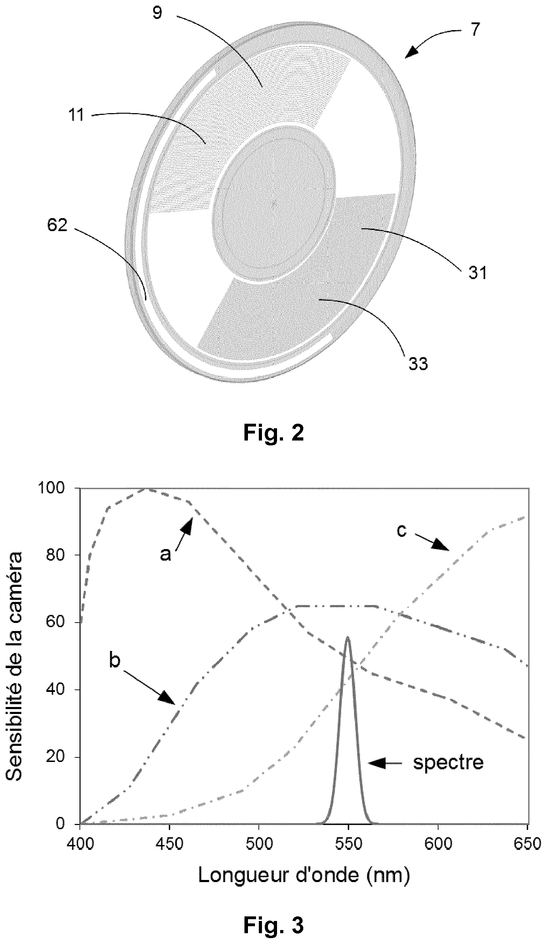

Selon un premier mode de réalisation illustré par les figures 1 et 2, une source lumineuse 1, par exemple une LED blanche, émet un faisceau de lumière polychromatique non polarisée 2, qui traverse un jeu de lentilles 3. Celles-ci jouent le rôle de condenseur et sont destinées à uniformiser l'intensité du faisceau lumineux. A la sortie des lentilles 3, le faisceau 4 est sensiblement uniforme et parallèle, et mesure quelques centimètres de diamètre.

Le système optique utilisé pour obtenir un faisceau parallèle et uniforme est un dispositif classique utilisé dans les appareils tels que les microscopes. L'homme du métier peut facilement l'adapter à ses besoins sans sortir du cadre de l'invention.

Le faisceau 4 traverse ensuite un cube polarisant 5 et adopte une polarisation rectiligne, puis atteint un masque 7 entraîné en rotation par un moteur 8. Plus précisément, le faisceau polarisé 6 arrive sur le masque tournant 7 dans un secteur 9 et éclaire N trous simultanément. Ces trous sont appelés trous sources 11, et par exemple agencés en portions de spirales concentriques.

Les trous sont qualifiés de trous sources car ils sont considérés comme autant de sources ponctuelles de lumière polychromatique polarisée rectilignement. La lumière traversant les trous est diffractée et la section de chaque faisceau incident présente un disque central et des cercles concentriques de plus en plus atténués.

Par ailleurs, les trous source 11 ont un diamètre de l'ordre de quelques dizaines de microns, préférentiellement d'une trentaine de microns, pour une ouverture du système optique de f/8.

De plus, la distance séparant deux trous 11 voisins est de l'ordre de 15 à 50 fois plus grande que le diamètre des trous source. De cette façon, les faisceaux incidents n'interfèrent pas entre eux.

On notera aussi que le moteur 8 entraîne le masque 7 à une fréquence de rotation de l'ordre de quelques dizaines de Hertz, voire d'une centaine de Hertz. Cette fréquence est avantageusement liée à la fréquence d'acquisition des données, comme cela sera exposé plus loin.

Par ailleurs, il est important de noter qu'étant donné que le masque 7 est mobile en rotation, les N trous source 11 éclairés par le faisceau 4 sont différents à chaque instant, de sorte que la position des N points objets éclairés par les N faisceaux incidents 14 change au cours du temps.

En sortie de masque, les N faisceaux incidents 14, polarisés rectilignement et divergents, atteignent un cube séparateur de polarisation 15 avec lame séparatrice dichroïque 17. Le cube 15 est agencé dans le montage optique de manière telle que les faisceaux atteignent la lame 17 en ayant un angle d'incidence de 45°.

De manière classique, un tel cube est prévu pour réfléchir la quasi-totalité du flux lumineux d'un faisceau polarisé selon un axe de polarisation prédéfini (polarisation P), et pour transmettre la quasi-totalité du flux lumineux d'un faisceau polarisé perpendiculairement (polarisation S). Ici le cube 15 réfléchit la quasi-totalité du flux lumineux des faisceaux incidents 14, et transmet la quasi-totalité du flux lumineux des faisceaux réfléchis, comme on le verra par la suite.

Généralement, une lame séparatrice dichroïque introduit des défauts chromatiques. Il en résulte que les faisceaux 18 réfléchis par la lame 17 ne sont plus des faisceaux parfaitement blancs.

Pour résoudre ce problème, un autocollimateur d'Offner modifié 19 est placé dans le montage optique.

Celui-ci est composé d'un miroir sphérique principal 21 et d'un miroir secondaire 23, lui aussi sphérique. De manière classique, le miroir 21 est argenté sur sa face avant, c'est-à-dire sur la face concave. En revanche le miroir 23 est un miroir de Mangin, et possède donc la particularité d'être argenté sur sa face arrière. En l'occurrence, sa face réfléchissante n'est pas sa face hyperbolique 25 mais sa face plane 27.

Le fait d'utiliser un miroir de Mangin en tant que miroir secondaire permet de corriger le chromatisme introduit par la lame séparatrice dichroïque, de façon à ce qu'à la sortie de l'autocollimateur d'Offner, les faisceaux incidents soient des faisceaux blancs.

Comme dans tous les autocollimateurs d'Offner, le montage est afocal, c'est-à-dire que le miroir secondaire 23 coïncide avec le foyer du miroir principal 21. De cette façon, tous les faisceaux parallèles à l'axe optique du miroir principal 21 sont dirigés vers le miroir secondaire 23.

En ce qui concerne l'invention, les faisceaux incidents 18, polarisés, légèrement chromatiques et divergents, sont réfléchis une première fois sur le miroir principal 21 en direction du miroir secondaire 23. Celui-ci renvoie les faisceaux incidents en direction du miroir principal 21, qui les renvoie en direction d'un miroir plan 29, placé de telle sorte que les axes des faisceaux aient un angle d'incidence de 45°. Le miroir 29 réfléchit alors les faisceaux incidents 30, polarisés, blancs et convergents, en direction du masque 7.

De façon classique, les miroirs 21 et 23 sont agencés de sorte que le grandissement de l'autocollimateur d'Offner 19 soit égal à -1. En conséquence, chaque faisceau parvient sur le masque 7, en un point diamétralement opposé au trou source 11 dont il provient.

Par ailleurs, les positions de l'autocollimateur d'Offner 19 ainsi que du miroir plan 29 sont étudiées pour que la distance parcourue par la lumière entre les trous sources 11 du masque 7 et le miroir secondaire 23, lorsque les faisceaux incidents sont divergents, soit identique à celle parcourue entre le miroir secondaire 23 et le masque 7, lorsque les faisceaux incidents sont convergents. De cette manière l'image des trous source est contenue dans le plan du masque 7.

Après avoir été réfléchis sur le miroir 29, les faisceaux incidents 30 arrivent sur le masque 7, plus précisément sur un secteur 31 comportant des trous, dits trous de filtrage 33, agencés en portions de spirales concentriques. Chaque trou de filtrage 33 est diamétralement opposé à un trou source 11, de sorte que la lumière issue d'un trou source repasse dans le trou de filtrage qui lui est associé.

Les trous de filtrage 33 ont un diamètre plus petit que celui des trous sources 11. Le diamètre est choisi pour être sensiblement égal au diamètre de la tâche d'Airy d'un faisceau éclairant un trou source du masque, qui serait monochromatique, et dont la longueur d'onde correspondrait à la longueur d'onde moyenne de la source lumineuse. Dans ce mode de réalisation, cela correspond à un diamètre de l'ordre de 7 à 10 µm.

Grâce aux trous de filtrage 33, les cercles concentriques situés en périphérie des faisceaux incidents 30 sont arrêtés par le masque. En conséquence le rapport signal sur bruit augmente, ce qui permet d'améliorer la précision des mesures.

A la sortie du masque 7, les faisceaux incidents 36, polarisés et filtrés, redeviennent divergents avec une ouverture du système optique identique à celle de départ, c'est-à-dire de f/8.

Ceux-ci arrivent sur un miroir plan 37 avec un angle d'incidence de 45° par rapport à celui-ci. Les faisceaux incidents 36 sont réfléchis en direction d'un second autocollimateur d'Offner 39 comprenant un miroir principal 41, de Mangin, et un miroir secondaire 43.

Le miroir principal 41 présente la spécificité d'être très épais, pour introduire du chromatisme axial sur une plage étendue de longueurs d'onde. Ainsi, les faisceaux incidents blancs 36 deviennent des faisceaux chromatiques après avoir traversé l'autocollimateur d'Offner.

A la sortie de ce second autocollimateur d'Offner, les faisceaux incidents 44 sont réfléchis par un miroir plan 45 incliné à 45° puis traversent une lame quart d'onde achromatique 47.

La lame quart d'onde achromatique 47 a pour effet de transformer la polarisation rectiligne des faisceaux incidents 44 en polarisation circulaire, sans introduire de chromatisme supplémentaire.

L'ensemble du convertisseur chromatique d'altimétrie est monté sur un objectif 49. Celui-ci peut être un objectif télécentrique ou bi-télécentrique. Le choix de l'objectif dépend de la taille de l'objet à analyser. Plus l'objet est grand, plus le champ de mesure doit être étendu, et donc plus le grandissement de l'objectif doit être élevé. Les objectifs 62-902, 62-912 et 62-922 de la marque Edmund Optics, ou S5LPJ7208 ou S5LPJ1555 de la marque Silloptics sont typiquement des objectifs pouvant être utilisés en association avec le convertisseur chromatique d'altimétrie selon l'invention.

On remarquera que l'objectif 49 voit sa profondeur de champ augmenter notablement. Pour une profondeur de champ théorique de l'ordre de 2 µm, celle-ci peut atteindre la centaine de microns avec des faisceaux chromatiques tels que ceux générés par le convertisseur chromatique d'altimétrie selon l'invention.

Les faisceaux incidents 48, chromatiques et polarisés circulairement, traversent donc l'objectif 49 puis se réfléchissent sur la surface 51 d'un échantillon 53, placé dans le champ de mesure de l'appareil.

Conformément au principe des confocaux chromatiques classiques, les faisceaux incidents 48 convergent selon une profondeur de champ étendue, chaque longueur d'onde du faisceau convergeant à une altitude qui lui est propre.

Grâce à cette spécificité, chaque faisceau réfléchi 54 comporte une partie centrale très brillante, monochromatique, dont la largeur est inférieure ou égale à celle du trou de filtrage, et un halo polychromatique qui entoure la partie centrale.

Il est important de noter que, si les faisceaux incidents 48 ont une polarisation circulaire gauche, les faisceaux réfléchis 54 ont une polarisation circulaire droite, et vice-versa. De cette façon, les faisceaux incidents 48 et réfléchis 54 n'interfèrent pas entre eux.

Par la suite, lorsque les faisceaux réfléchis 54 traversent la lame quart d'onde 47, leur polarisation circulaire est transformée en polarisation rectiligne. Leur axe de polarisation est orthogonal à l'axe de polarisation des faisceaux incidents 48, de sorte qu'ils n'interfèrent toujours pas.

Les faisceaux réfléchis 56, polarisés rectilignement, traversent ensuite l'autocollimateur d'Offner 39, qui introduit un chromatisme supplémentaire, calibré au préalable.

En arrivant sur les trous de filtrage 33 du masque 7, chaque faisceau 58 réfléchi est filtré. Seule la composante du faisceau dont la longueur d'onde converge dans le plan du masque 7 peut passer à travers le trou, c'est-à-dire la partie centrale très brillante. Le halo polychromatique est filtré en quasi-totalité par la paroi du masque. Il en résulte que la largeur spectrale de chaque faisceau réfléchi 60 est extrêmement faible.

Les faisceaux réfléchis 60, quasi-monochromatiques et polarisés rectilignement, traversent ensuite l'autocollimateur d'Offner modifié 19, puis le cube polarisant 15, de sorte que leurs répartitions spectrales restent inchangées. En effet, comme nous l'avions précisé auparavant, l'autocollimateur d'Offner modifié 19 est conçu pour compenser les défauts chromatiques générés par le cube polarisant 15.

Par ailleurs, la quasi-totalité du flux lumineux parvenant sur le cube polarisant 15 est transmis en direction d'un dispositif d'analyse spectrale. Seule une infime partie de l'intensité est réfléchie vers le masque 7. Cela est dû au fait que le cube réfléchit les ondes polarisées selon un axe, et transmet celles polarisées selon un axe orthogonal.

Le dispositif d'analyse spectrale (non représenté) comprend une caméra, par exemple, une caméra à couleurs complémentaires, telle que la caméra industrielle Basler Ace GigE acA750-30gc, ou une caméra trichromatique telle que la caméra industrielle Basler Ace GigE acA2500-14gc ou Foveon X3 Pro 10M CMOS Direct Image Sensor.

Ces caméras trichromatiques présentent notamment la particularité d'être sensibles dans le rouge et le bleu autour d'une longueur d'onde de 550nm, ce qui permet d'augmenter la qualité des mesures.

A cet effet la figure 3 représente la résolution spectrale de ce type de caméra. La courbe désignée par la lettre a correspond à la sensibilité de la caméra dans le bleu, la courbe désignée par la lettre b représente la sensibilité dans le rouge, et enfin la courbe désignée par la lettre c montre la sensibilité dans le vert.

La résolution typique des caméras utilisées est de l'ordre de quelques Méga pixels, plus précisément de 4 à 5 Méga pixels, pour une surface photosensible de quelques dizaines de millimètres, typiquement de 20 mm x 14 mm. De cette manière, dans ce premier mode de réalisation, la taille des pixels de la caméra est sensiblement égale à la réponse percussionnelle du système optique, c'est-à-dire à la taille des trous de filtrage 33.

Compte tenu des valeurs caractéristiques du type de caméra utilisée, ainsi que des valeurs caractéristiques des trous de filtrage (8 µm de diamètre), et de la distance séparant deux trous de filtrage (15 fois le diamètre d'un trou = 120 µm), on notera qu'environ 20000 taches images éclairent simultanément la surface photosensible de la caméra.

Par ailleurs, le choix de la résolution de la caméra est un facteur important pour l'analyse de la surface 51 de l'échantillon 53. Dans la mesure du possible, le convertisseur chromatique d'altimétrie est agencé pour qu'au cours de l'acquisition d'une image, chaque pixel de la caméra reçoive l'intensité lumineuse d'au moins un faisceau réfléchi.

On notera que si la caméra a une résolution supérieure au nombre total de faisceaux secondaires réfléchis, l'information chromatique est alors moyennée sur chaque zone de pixels du capteur de la caméra, qui est éclairée par un même faisceau réfléchi.

Il est aussi important de souligner que, dans ce mode de réalisation, les trous sources 11 et les trous de filtrage 33 ne sont pas présents sur toute la superficie du masque 7, et donc les données acquises par le dispositif d'analyse spectrale ne sont pas toutes pertinentes.

Ici, le masque tournant comprend des trous sources 11 répartis sur une surface du masque de l'ordre de 25%, et des trous de filtrage également répartis sur une surface de l'ordre de 25%. Une possibilité parmi d'autre est donc d'éclairer le masque de manière séquentielle, par exemple en introduisant un obturateur (non représenté) devant la source lumineuse 1, lorsque cette dernière n'éclaire pas le secteur 9 sur lequel les trous sources 11 sont répartis.

Alternativement, on peut aussi choisir de commander la source lumineuse 1 de telle manière qu'elle soit éteinte lorsqu'elle n'éclaire pas les trous sources 11.

Un dispositif de commande de l'éclairage séquentiel du masque comprend par exemple un laser (non représenté) placé en amont du masque à proximité de la source lumineuse, et un capteur (non représenté) placé en aval du masque 7. Le faisceau passe périodiquement à travers un évidement semi-circulaire 62 du masque, de telle sorte que l'intensité lumineuse reçue par le capteur permet de savoir à quel instant l'obturateur doit être placé devant la source lumineuse 1, ou à quel instant celle-ci doit être allumée ou éteinte.

Un tel dispositif de commande d'un obturateur ou d'une source lumineuse est classique et l'homme du métier pourra facilement l'adapter à ses besoins.

Par ailleurs, lors de l'acquisition des images par la caméra, le masque 7 effectue un certain nombre de tours complets. Ainsi, plus le nombre de tour effectué est grand, plus l'intensité lumineuse reçue par les pixels de la caméra est élevée.

Alternativement, compte tenu de la géométrie du masque tournant 7, une autre méthode d'acquisition peut consister à choisir la fréquence de rotation du masque de façon à ce qu'elle soit quatre fois plus faible que celle de la caméra. De cette manière, le dispositif d'analyse spectrale est configuré pour ne prendre en compte qu'une image acquise sur quatre, c'est-à-dire uniquement les images formées par les faisceaux réfléchis issus des trous de filtrage.

Une autre méthode de traitement peut consister à acquérir des images de manière séquentielle. Par exemple, pour une fréquence d'acquisition de la caméra de 100 Hz et une fréquence de rotation du masque de 25 Hz, une image peut être acquise en 10 ms toutes les 40 ms.

Finalement, chaque pixel de la caméra reçoit une information spectrale sous forme de pic tel que présenté à la figure 3. Connaissant la longueur d'onde du maximum du pic spectral, on peut en déduire la hauteur locale de la surface 51, dans chaque zone éclairée par un faisceau incident, et reconstituer la topographie de l'échantillon 53.

La description qui précède s'attache à décrire un mode de réalisation particulier à titre d'illustration non limitative, et l'invention n'est pas limitée à certaines caractéristiques particulières qui viennent d'être décrites. De nombreux autres modes de réalisation pourraient être envisagés sans sortir du cadre de l'invention défini par les revendications jointes.

Notamment, les moyens présentés pour polariser et séparer le faisceau incident ne sont pas limitatifs et l'homme du métier ne rencontrera pas de difficulté particulière pour les adapter en fonction de ses propres besoins.

Le cube séparateur peut en particulier être utilisé pour transmettre la quasi-totalité du flux lumineux des faisceaux incidents, et réfléchir la quasi-totalité du flux lumineux des faisceaux réfléchis.

En outre, pour obtenir des données exploitables, l'éclairage séquentiel du masque peut être remplacé par une configuration du dispositif d'analyse spectrale permettant de sélectionner les images acquises, ou d'acquérir des images de manière séquentielle.

## Revendications

1. Convertisseur chromatique d'altimétrie destiné à réaliser une image réelle et complète d'une zone d'observation prédéfinie de la surface (51) d'un échantillon (53) représentative de la hauteur locale de cet échantillon, le convertisseur comportant :
un dispositif d'illumination de l'échantillon comprenant au moins une source de lumière polychromatique (1) et, agencé de manière à couvrir à chaque instant l'ensemble de ladite zone d'observation prédéfinie,
un masque (7) comportant une pluralité d'organes de transmission (11) et permettant de générer simultanément N faisceaux incidents (14) à partir de ladite lumière polychromatique, chaque faisceau incident définissant un point objet dudit échantillon, ledit masque étant agencé de telle manière qu'il occulte une portion de ladite lumière polychromatique pour ne laisser passer que lesdits N faisceaux incidents, ceux-ci étant répartis sensiblement dans toute l'étendue de ladite zone d'observation,
un dispositif optique (39) destiné à introduire du chromatisme axial dans chacun desdits N faisceaux incidents, suivant une plage donnée de longueurs d'onde, avant que lesdits N faisceaux incidents ne parviennent à la surface de l'échantillon pour être réfléchis en N faisceaux réfléchis respectifs par lesdits points objets correspondants, un dispositif de filtrage (7) présentant au moins N trous de filtrage (33) associés auxdits N faisceaux réfléchis respectifs pour les convertir en des faisceaux filtrés de faible largeur spectrale, destinés à former des taches images constitutives de ladite image réelle,
**caractérisé en ce qu'**il comporte au moins un dispositif de polarisation (5) permettant de polariser lesdits N faisceaux incidents et lesdits N faisceaux réfléchis, et
**en ce que** ledit dispositif optique (39) destiné à introduire du chromatisme axial est un autocollimateur d'Offner comportant au moins un miroir de Mangin (41).

2. Convertisseur chromatique d'altimétrie selon la revendication 1, **caractérisé en ce que** le masque (7) est monté mobile pour modifier la position desdits points objets au cours du temps, pour que ces derniers balayent sensiblement toute la zone d'observation.

3. Convertisseur chromatique d'altimétrie selon l'une quelconque des revendications précédentes, **caractérisé en ce que**
ledit masque (7) présente sensiblement la forme d'un disque, et comporte au moins un secteur comprenant lesdits organes de transmission,
et **en ce qu'**un masque supplémentaire (7), de géométrie similaire à celle du premier masque, comporte au moins un secteur comprenant lesdits trous de filtrage dudit dispositif de filtrage,
les deux masques (7) étant entraînés en rotation à la même vitesse, au moyen d'un organe d'entraînement, et agencés de telle manière qu'à chaque instant, un trou de filtrage dudit masque supplémentaire est associé à l'un desdits N faisceaux réfléchis par un point objet de ladite surface dudit échantillon.

4. Convertisseur chromatique d'altimétrie selon l'une quelconque des revendications 1 ou 2, **caractérisé en ce que**
ledit masque (7) présente sensiblement la forme d'un disque, et porte également ledit dispositif de filtrage,
lesdits organes de transmission et lesdits trous de filtrage étant agencés les uns relativement aux autres de telle manière qu'à chaque instant, un trou de filtrage dudit masque est associé à l'un desdits N faisceaux réfléchis par un point objet de ladite surface dudit échantillon.

5. Convertisseur chromatique d'altimétrie selon la revendication 4, **caractérisé en ce que** ledit masque (7) comporte un nombre pair de secteurs, chaque secteur comprenant des organes de transmission étant associé à un secteur comprenant des trous de filtrage, qui lui est diamétralement opposé.

6. Convertisseur chromatique d'altimétrie selon l'une quelconque des revendications précédentes, **caractérisé en ce que** ledit ou lesdits masque(s) (7) comporte(nt) des zones neutres bloquant le passage de ladite lumière polychromatique.

7. Convertisseur chromatique d'altimétrie selon l'une quelconque des revendications précédentes, **caractérisé en ce que** lesdits organes de transmission comportent des trous, dits trous sources, de plus grand diamètre que lesdits trous de filtrage.

8. Convertisseur chromatique d'altimétrie selon la revendication 7, **caractérisé en ce que** lesdits N faisceaux incidents sont également filtrés au moyen desdits trous de filtrage pour être convertis en des faisceaux spatialement homogènes, avant de parvenir à la surface dudit échantillon.

9. Convertisseur chromatique d'altimétrie selon l'une quelconque des revendications précédentes, **caractérisé en ce que** ladite source de lumière polychromatique (1) éclaire ledit masque (7) de manière séquentielle.

10. Convertisseur chromatique d'altimétrie selon l'une quelconque des revendications précédentes, **caractérisé en ce qu'**il comprend en outre un dispositif (15, 17) de séparation de la lumière, destiné à séparer les flux lumineux desdits N faisceaux incidents et desdits N faisceaux réfléchis, pour permettre à la quasi-totalité du flux lumineux des premiers de se propager en direction de ladite surface de l'échantillon et à la quasi-totalité du flux lumineux des seconds de se propager en direction d'un dispositif d'analyse comportant une caméra, ledit dispositif d'analyse étant agencé pour convertir une longueur d'onde en une hauteur locale du point objet correspondant de la surface de l'échantillon.

11. Convertisseur chromatique d'altimétrie selon la revendication 10, **caractérisé en ce que** ladite caméra est une caméra trichomatique ou à couleurs complémentaires.

12. Convertisseur chromatique d'altimétrie selon l'une quelconque des revendications 10 ou 11, **caractérisé en ce qu'**un second autocollimateur d'Offner (19) dont l'un des deux miroirs est un miroir de Mangin (23) est disposé en amont dudit dispositif destiné à introduire du chromatisme axial, pour corriger les défauts chromatiques générés par ledit dispositif (15, 17) de séparation de la lumière.

13. Convertisseur chromatique d'altimétrie selon l'une quelconque des revendications précédentes, **caractérisé en ce qu'**il est monté sur un objectif télécentrique (49), préférablement bi-télécentrique.

14. Procédé de réalisation d'une image réelle d'une zone d'observation prédéfinie de la surface (51) d'un échantillon (53) représentative de la hauteur locale de cet échantillon, par la mise en oeuvre d'un convertisseur chromatique d'altimétrie, comportant les étapes consistant à :
- mettre en oeuvre un dispositif d'illumination de l'échantillon comprenant au moins une source de lumière polychromatique (1), ledit dispositif d'illumination étant mis en oeuvre de manière à couvrir à chaque instant l'ensemble de ladite zone d'observation prédéfinie,
- diviser ladite lumière polychromatique en générant simultanément, à l'aide d'un masque (7), N faisceaux incidents (14) à partir de ladite lumière polychromatique, chaque faisceau incident (14) définissant l'un desdits points objets, ledit masque (7) étant agencé pour occulter une portion de ladite lumière polychromatique pour ne laisser passer que lesdits N faisceaux incidents, ceux-ci étant répartis sensiblement dans toute l'étendue de ladite zone d'observation,
- introduire du chromatisme axial dans chacun desdits N faisceaux incidents, suivant une plage donnée de longueurs d'onde, avant que lesdits N faisceaux incidents ne parviennent à la surface de l'échantillon pour être réfléchis en N faisceaux réfléchis respectifs par lesdits points objets correspondants,
- filtrer lesdits N faisceaux réfléchis pour les convertir en des faisceaux filtrés de faible largeur spectrale, destinés à former des taches images constitutives de ladite image réelle,
**caractérisé en ce qu'**il comporte des étapes supplémentaires consistant à polariser lesdits N faisceaux incidents et lesdits N faisceaux réfléchis, tandis que l'étape consistant à introduire du chromatisme axial dans lesdits N faisceaux incidents est mise en oeuvre par l'interposition d'un autocollimateur d'Offner (39) comportant au moins un miroir de Mangin (41) sur le trajet desdits N faisceaux incidents.

## Patentansprüche

1. Chromatischer Höhenmesswandler, der dazu bestimmt ist, ein reales und komplettes Bild einer vordefinierten Beobachtungszone der Oberfläche (51) einer Probe (53), die für die lokale Höhe dieser Probe repräsentativ ist, herzustellen, wobei der Wandler umfasst:
- eine Beleuchtungsvorrichtung der Probe, umfassend mindestens eine polychromatische Lichtquelle (1),
und angeordnet, um zu jedem Zeitpunkt die Gesamtheit der vordefinierten Beobachtungszone abzudecken,
- eine Maske (7), die eine Vielzahl von Übertragungselementen (11) umfasst und es ermöglicht, gleichzeitig N eintreffende Strahlenbündel (14) aus dem polychromatischen Licht zu erzeugen, wobei jedes eintreffende Strahlenbündel einen Objektpunkt der Probe definiert, wobei die Maske derart angeordnet ist, dass sie einen Abschnitt des polychromatischen Lichts verdeckt, um nur die N eintreffenden Strahlenbündel durchzulassen, wobei diese im Wesentlichen im gesamten Bereich der Beobachtungszone verteilt sind,
- eine optische Vorrichtung (39), die dazu bestimmt ist, einen axialen Chromatismus in jedes der N eintreffenden Strahlenbündel nach einem gegebenen Wellenlängenbereich einzuführen, bevor die N eintreffenden Strahlenbündel an der Oberfläche der Probe ankommen, um in jeweiligen N reflektierten Strahlenbündeln von den entsprechenden Objektpunkten reflektiert zu werden,
- eine Filtervorrichtung (7), die mindestens N Filterlöcher (33) aufweist, die den jeweiligen N reflektierten Strahlenbündeln zugewiesen sind, um sie in gefilterte Strahlenbündel von geringer Spektralbreite umzuwandeln, die dazu bestimmt sind, Bildflecken, die das reale Bild darstellen, zu bilden,
**dadurch gekennzeichnet, dass** er mindestens eine Polarisationsvorrichtung (5) umfasst, die es ermöglicht, die N eintreffenden Strahlenbündel und die N reflektierten Strahlenbündel zu polarisieren, und dass die optische Vorrichtung (39), die dazu bestimmt ist, einen axialen Chromatismus einzuführen, ein Offner-Autokollimator ist, umfassend mindestens einen Mangin-Spiegel (41).

2. Chromatischer Höhenmesswandler nach Anspruch 1, **dadurch gekennzeichnet, dass** die Maske (7) beweglich montiert ist, um die Position der Objektpunkte mit der Zeit zu verändern, damit diese letztgenannten im Wesentlichen die gesamte Beobachtungszone abtasten.

3. Chromatischer Höhenmesswandler nach einem der vorhergehenden Ansprüche, **dadurch gekennzeichnet, dass** die Maske (7) im Wesentlichen die Form einer Scheibe aufweist und mindestens einen Sektor umfasst, der die Übertragungselemente umfasst, und dass eine zusätzliche Maske (7) mit ähnlicher Geometrie wie die erste Maske mindestens einen Sektor umfasst, der die Filterlöcher der Filtervorrichtung umfasst, wobei die beiden Masken (7) in Drehung mit derselben Geschwindigkeit mit Hilfe eines Antriebselements angetrieben werden und derart angeordnet sind, dass zu jedem Zeitpunkt ein Filterloch der zusätzlichen Maske einem der N reflektierten Strahlenbündel durch einen Objektpunkt der Oberfläche der Probe zugewiesen ist.

4. Chromatischer Höhenmesswandler nach einem der Ansprüche 1 oder 2, **dadurch gekennzeichnet, dass** die Maske (7) im Wesentlichen die Form einer Scheibe aufweist und auch die Filtervorrichtung trägt, wobei die Übertragungselemente und die Filterlöcher derart in Bezug zueinander angeordnet sind, dass zu jedem Zeitpunkt ein Filterloch der Maske einem der N reflektierten Strahlenbündel durch einen Objektpunkt der Oberfläche der Probe zugewiesen ist.

5. Chromatischer Höhenmesswandler nach Anspruch 4, **dadurch gekennzeichnet, dass** die Maske (7) eine gerade Anzahl von Sektoren umfasst, wobei jeder Sektor, der Übertragungselemente umfasst, einem Sektor, der Filterlöcher umfasst, der ihm diametral gegenüberliegt, zugewiesen ist.

6. Chromatischer Höhenmesswandler nach einem der vorhergehenden Ansprüche, **dadurch gekennzeichnet, dass** die Maske(n) (7) neutrale Zonen umfasst (umfassen), die den Durchgang des polychromatischen Lichts verhindern.

7. Chromatischer Höhenmesswandler nach einem der vorhergehenden Ansprüche, **dadurch gekennzeichnet, dass** die Übertragungselemente Löcher, Quellenlöcher genannt, mit einem größeren Durchmesser als die Filterlöcher umfassen.

8. Chromatischer Höhenmesswandler nach Anspruch 7, **dadurch gekennzeichnet, dass** die N eintreffenden Strahlenbündel ebenfalls mit Hilfe der Filterlöcher gefiltert werden, um in räumlich homogene Strahlenbündel umgewandelt zu werden, bevor sie an der Oberfläche der Probe ankommen.

9. Chromatischer Höhenmesswandler nach einem der vorhergehenden Ansprüche, **dadurch gekennzeichnet, dass** die polychromatische Lichtquelle (1) die Maske (7) auf sequentielle Weise beleuchtet.

10. Chromatischer Höhenmesswandler nach einem der vorhergehenden Ansprüche, **dadurch gekennzeichnet, dass** er ferner eine Vorrichtung (15, 17) zum Trennen des Lichts umfasst, die dazu bestimmt ist, die Lichtströme der N eintreffenden Strahlenbündel und der N reflektierten Strahlenbündel zu trennen, um es gleichsam der Gesamtheit des Lichtstroms der ersten zu ermöglichen, sich in Richtung der Oberfläche der Probe auszubreiten, und es gleichsam der Gesamtheit des Lichtstroms der zweiten zu ermöglichen, sich in Richtung einer Analysevorrichtung, umfassend eine Kamera, auszubreiten, wobei die Analysevorrichtung derart angeordnet ist, dass sie eine Wellenlänge in eine lokale Höhe des entsprechenden Objektpunktes der Oberfläche der Probe umwandelt.

11. Chromatischer Höhenmesswandler nach Anspruch 10, **dadurch gekennzeichnet, dass** die Kamera eine trichromatische Kamera oder mit Komplementärfarben ist.

12. Chromatischer Höhenmesswandler nach einem der Ansprüche 10 oder 11, **dadurch gekennzeichnet, dass** ein zweiter Offner-Autokollimator (19), bei dem einer der beiden Spiegel ein Mangin-Spiegel (23) ist, stromaufwärts zu der Vorrichtung, die dazu bestimmt ist, einen axialen Chromatismus einzuführen, angeordnet ist, um die chromatischen Fehler zu korrigieren, die von der Vorrichtung (15, 17) zum Trennen des Lichts erzeugt werden.

13. Chromatischer Höhenmesswandler nach einem der vorhergehenden Ansprüche, **dadurch gekennzeichnet, dass** er auf einem telezentrischen, vorzugsweise bi-telezentrischen, Objektiv (49) montiert ist.

14. Verfahren zur Herstellung eines realen Bildes einer vordefinierten Beobachtungszone der Oberfläche (51) einer Probe (53), die für die lokale Höhe dieser Probe repräsentativ ist, durch den Einsatz eines chromatischen Höhenmesswandlers, umfassend die folgenden Schritte, darin bestehend:
- Einsatz einer Beleuchtungsvorrichtung der Probe, umfassend mindestens eine polychromatische Lichtquelle (1), wobei die Beleuchtungsvorrichtung eingesetzt wird, um zu jedem Zeitpunkt die Gesamtheit der vordefinierten Beobachtungszone abzudecken,
- Teilen des polychromatischen Lichts, wobei gleichzeitig mit Hilfe einer Maske (7) N eintreffende Strahlenbündel (14) aus dem polychromatischen Licht erzeugt werden, wobei jedes eintreffende Strahlenbündel (14) einen der Objektpunkte definiert, wobei die Maske (7) derart angeordnet ist, dass sie einen Abschnitt des polychromatischen Lichts verdeckt, um nur die N eintreffenden Strahlenbündel durchzulassen, wobei diese im Wesentlichen im gesamten Bereich der Beobachtungszone verteilt sind,
- Einführung eines axialen Chromatismus in jedes der N eintreffenden Strahlenbündel nach einem gegebenen Wellenlängenbereich, bevor die N eintreffenden Strahlenbündel an der Oberfläche der Probe ankommen, um in jeweiligen N reflektierten Strahlenbündeln von den entsprechenden Objektpunkten reflektiert zu werden,
- Filtern der N reflektierten Strahlenbündel, um sie in gefilterte Strahlenbündel von geringer Spektralbreite umzuwandeln, die dazu bestimmt sind, Bildflecken, die das reale Bild darstellen, zu bilden,
**dadurch gekennzeichnet, dass** es zusätzliche Schritte umfasst, die darin bestehen, die N eintreffenden Strahlenbündel und die N reflektierten Strahlenbündel zu polarisieren, während der Schritt, der darin besteht, einen axialen Chromatismus in die N eintreffenden Strahlenbündel einzuführen, durch Zwischenschalten eines Offner-Autokollimators (39), umfassend mindestens einen Mangin-Spiegel (41), auf der Bahn der N eintreffenden Strahlenbündel eingesetzt wird.

## Claims

1. A chromatic converter for altimetry intended to produce a real and complete image of a predefined observation zone of a sample (53) surface (51) that is representative of the local height of this sample, the converter comprising :
a device for illuminating the sample comprising at least one polychromatic light source (1) and, arranged in such a way as to cover, at each instant, all of said predefined observation zone,
a mask (7) comprising a plurality of transmission members (11) and making it possible to simultaneously generate N incident beams (14) from said polychromatic light, each incident beam defining an object point of said sample, said mask being arranged in such a way that it blocks a portion of said polychromatic light to allow only said N incident beams to pass, the latter being distributed substantially throughout the extent of said observation zone,
an optical device (39) intended to introduce axial chromatism into each of said N incident beams, according to a given range of wavelengths, before said N incident beams arrive at the sample surface to be reflected as N respective reflected beams by said corresponding object points,
a filtering device (7) having at least N filtering holes (33) associated with said N respective reflected beams to convert them into filtered beams of low spectral width, intended to form image spots constituting said real image,
**characterized in that** it comprises at least one polarization device (5) making it possible to polarize said N incident beams and said N reflected beams, and
**in that** said optical device (39) intended to introduce axial chromatism is an Offner autocollimator comprising at least one Mangin mirror (41).

2. The chromatic converter for altimetry as claimed in claim 1, **characterized in that** the mask (7) is movably mounted to modify the position of said object points over time, so that the latter scan substantially all of the observation zone.

3. The chromatic converter for altimetry as claimed in either of the preceding claims, **characterized in that**
said mask (7) is substantially in the form of a disk, and comprises at least one segment comprising said transmission members,
and **in that** an additional mask (7), of geometry similar to that of the first mask, comprises at least one segment comprising said filtering holes of said filtering device,
the two masks (7) being driven in rotation at the same speed, by means of a driving member, and arranged in such a way that, at each instant, a filtering hole of said additional mask is associated with one of said N beams reflected by an object point of said surface of said sample.

4. The chromatic converter for altimetry as claimed in either one of claims 1 or 2, **characterized in that**
said mask (7) is substantially in the form of a disk, and also bears said filtering device,
said transmission members and said filtering holes being arranged relative to one another in such a way that, at each instant, a filtering hole of said mask is associated with one of said N beams reflected by an object point of said surface of said sample.

5. The chromatic converter for altimetry as claimed in claim 4, **characterized in that** said mask (7) comprises an even number of segments, each segment comprising transmission members being associated with a segment comprising filtering holes, which is diametrically opposite thereto.

6. The chromatic converter for altimetry as claimed in any one of the preceding claims, **characterized in that** said mask or masks (7) comprises/comprise neutral zones blocking the passage of said polychromatic light.

7. The chromatic converter for altimetry as claimed in any one of the preceding claims, **characterized in that** said transmission members comprise holes, called source holes, of a greater diameter than said filtering holes.

8. The chromatic converter for altimetry as claimed in claim 7, **characterized in that** said N incident beams are also filtered by means of said filtering holes to be converted into spatially uniform beams, before arriving at the surface of said sample.

9. The chromatic converter for altimetry as claimed in any one of the preceding claims, **characterized in that** said polychromatic light source (1) lights said mask (7) sequentially.

10. The chromatic converter for altimetry as claimed in any one of the preceding claims, **characterized in that** it further comprises a light-splitting device (15, 17), intended to split the light fluxes of said N incident beams and of said N reflected beams, to allow almost all of the light flux of the former to propagate toward said surface of the sample and almost all of the light flux of the latter to propagate toward an analysis device comprising a camera, said analysis device being arranged to convert a wavelength into a local height of the corresponding object point of the surface of the sample.

11. The chromatic converter for altimetry as claimed in claim 10, **characterized in that** said camera is a trichromatic camera or a complementary color camera.

12. The chromatic converter for altimetry as claimed in either one of claims 10 and 11, **characterized in that** a second Offner autocollimator (19) of which one of the two mirrors is a Mangin mirror (23) is arranged upstream of said device intended to introduce axial chromatism, to correct the chromatic defects generated by said light-splitting device (15, 17).

13. The chromatic converter for altimetry as claimed in any one of the preceding claims, **characterized in that** it is mounted on a telecentric, preferably bi-telecentric, lens (49).

14. A method for producing a real image of a predefined observation zone of the surface (51) of a sample (53) representative of the local height of this sample, by the implementation of a chromatic converter for altimetry, comprising the steps consisting in:
- applying a device for illuminating the sample comprising at least one polychromatic light source (1), said illumination device being applied in such a way as to cover, at each instant, all of said predefined observation zone,
- dividing said polychromatic light by simultaneously generating, using a mask (7), N incident beams (14) from said polychromatic light, each incident beam (14) defining one of said object points, said mask (7) being arranged to block a portion of said polychromatic light to allow only said N incident beams to pass, the latter being distributed substantially throughout the extent of said observation zone,
- introducing axial chromatism into each of said N incident beams, according to a given range of wavelengths, before said N incident beams arrive at the sample surface to be reflected as N respective reflected beams by said corresponding object points,
- filtering said N reflected beams to convert them into filtered beams of low spectral width, intended to form image spots constituting said real image,
**characterized in that** it comprises additional steps consisting in polarizing said N incident beams and said N reflected beams, while the step consisting in introducing axial chromatism into said N incident beams is implemented by the interposition of an Offner autocollimator (39) comprising at least one Mangin mirror (41) on the path of said N incident beams.
